(19) **Europäisches Patentamt / European Patent Office / Office européen des brevets**

(11) **EP 3 535 730 B1**

(12) # FASCICULE DE BREVET EUROPEEN

(45) Date de publication et mention
de la délivrance du brevet:
**20.08.2025 Bulletin 2025/34**

(21) Numéro de dépôt: **17800748.0**

(22) Date de dépôt: **03.11.2017**

(51) Classification Internationale des Brevets (IPC):
**G06T 5/70** *(2024.01)*

(52) Classification Coopérative des Brevets (CPC):
**G06T 5/70**

(86) Numéro de dépôt international:
**PCT/EP2017/078237**

(87) Numéro de publication internationale:
**WO 2018/083266 (11.05.2018 Gazette 2018/19)**

(54) **PROCÉDÉ ET DISPOSITIF DE RESTAURATION D'IMAGE NUMÉRIQUE**

VERFAHREN UND VORRICHTUNG ZUR WIEDERHERSTELLUNG DIGITALER BILDER

METHOD AND DEVICE FOR DIGITAL IMAGE RESTORATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2016 FR 1660704**

(43) Date de publication de la demande:
**11.09.2019 Bulletin 2019/37**

(73) Titulaire: **Centre National d'Etudes Spatiales
75001 Paris (FR)**

(72) Inventeurs:
• **BLANCHET, Gwendoline
31400 Toulouse (FR)**
• **DELVIT, Jean-Marc
31400 Toulouse (FR)**
• **LATRY, Christophe
31400 Toulouse (FR)**
• **THIEBAUT, Carole
31320 Castanet-Tolosan (FR)**
• **CAMARERO, Roberto
31600 Muret (FR)**

(74) Mandataire: **Germain Maureau
12, rue Boileau
69006 Lyon (FR)**

(56) Documents cités:
**FR-A1- 3 025 640     US-A1- 2005 259 889**

**Description**

La présente invention concerne un procédé de restauration d'image numérique issue d'une image initiale acquise par un dispositif d'acquisition d'image ayant un bruit instrumental d'acquisition associé, puis compressée par un procédé de compression prédéterminé. Elle concerne également un dispositif de restauration associé.

L'invention se situe dans le domaine de l'amélioration de la qualité des images numériques.

En particulier, l'invention s'adresse à l'amélioration de la qualité des images numériques présentant du bruit d'acquisition et de compression. Ces images peuvent être monospectrales, multispectrales, ou hyperspectrales.

La compression des images est largement utilisée, qu'il s'agisse d'images fixes ou de vidéos numériques.

L'invention traite plus particulièrement le cas des images fixes, acquises par tout type de dispositif d'acquisition.

Les images numériques sont en général représentées par des matrices d'échantillons d'image ou pixels, chaque échantillon d'image ayant une valeur de radiométrie de dynamique donnée. Une image couleur (multi ou hyperspectrale) est alors représentée par autant de matrices que de composantes de couleurs, chaque échantillon ayant une valeur de radiométrie pour chaque couleur dite bande spectrale.

D'une manière générale, les procédés de compression comprennent l'application de trois traitements à une image numérique source, qui sont les suivants : décorrélation, quantification, codage. Dans plusieurs standards de compression d'image numérique, la décorrélation est obtenue par application d'une transformation, appliquée aux pixels pour obtenir des coefficients transformés.

Le standard de compression JPEG (« Joint Photographic Expert Group ») utilise une transformation en cosinus discrète (DCT) appliquée sur des blocs d'image de taille 8x8, suivie d'une quantification par blocs et d'un codage entropique.

Le standard de compression JPEG2000 a été mis au point après JPEG. Ce standard utilise une transformation en ondelettes discrètes (DWT) de l'image numérique source. La quantification et le codage sont effectués en une seule étape, grâce à un codage par couches de qualité, obtenues par un codage par plans de bits des coefficients transformés.

Les divers standards de compression introduisent, à fort taux de compression, des artefacts visuels, également appelés artefacts de compression, qui sont structurés, étant liés aux fonctions de base de la transformation appliquée. De tels artefacts de compression sont par exemple les effets de blocs pour JPEG et des aplats et des motifs papillons pour les procédés de compression utilisant une transformation en ondelettes.

Dans le cadre de diverses applications, par exemple dans l'acquisition d'images par satellite, les images sont acquises par un dispositif d'acquisition, compressées par un procédé de compression donné et mémorisées ou transmises à un dispositif distant pour une exploitation ultérieure.

Dans le cas de l'imagerie par satellite, l'acquisition et la compression d'images se font à bord d'un satellite, et l'exploitation est faite au sol. Dans ce cas l'image est habituellement composée d'une image bande large dite panchromatique très résolue spatialement et de n images acquises dans des bandes spectrales beaucoup plus étroites représentant l'information multispectrale couleur, l'acquisition étant effectuée avec un pas d'échantillonnage k fois plus grand que le pas d'échantillonnage de la bande panchromatique, k valant généralement 4. Un procédé de fusion d'images permet de mixer l'image panchromatique et les n images multispectrales afin d'obtenir n images couleurs à la résolution spatiale du panchromatique. La description qui suit s'applique aussi bien aux images panchromatiques qu'aux images multispectrales.

Les images numériques comprennent des artefacts dus à la compression, qu'il s'agisse d'images panchromatiques ou multispectrales, du flou ainsi que du bruit. De manière classique, on effectue une décompression, une restauration et une fusion des images, la restauration comprenant classiquement une déconvolution suivie d'un débruitage.

De manière connue, le flou introduit par un dispositif d'acquisition peut être modélisé par la convolution du paysage observé par une fonction caractéristique du dispositif d'acquisition, nommée réponse impulsionnelle, qui représente l'image d'un objet ponctuel. De façon équivalente, ce flou se traduit dans le domaine de Fourier par la multiplication de la transformée de Fourier du paysage par la transformée de Fourier de la réponse impulsionnelle, nommée Fonction de Transfert de Modulation (FTM). La FTM caractérise l'atténuation des fréquences spatiales par l'instrument. La déconvolution d'une image vise à compenser ce flou par convolution de l'image avec un filtre dit de déconvolution, dont la transformée de Fourier est proche de l'inverse de la FTM.

Des artefacts peuvent subsister, notamment lorsque l'image numérique à restaurer comprend à la fois du bruit et des artefacts dus à la compression. De tels artefacts sont visuellement gênants pour les utilisateurs, et peuvent nuire à une exploitation ultérieure des images, notamment sur le produit fusionné.

Des méthodes pour réduire le bruit dans des images sont connues, par exemple dans la publication US2005/0259889 A1.

Il existe un besoin d'améliorer la qualité de la restauration des images dans ce contexte, et plus généralement, la restauration d'images bruitées.

A cet effet, l'invention propose un procédé de restauration d'image numérique selon la revendication 1.

Avantageusement, le procédé de l'invention a pour effet d'améliorer la qualité des images obtenues après restauration, la restitution de bruit instrumental d'acquisition permettant de modifier la distribution de bruit dans les images numériques avant la restauration (débruitage et déconvolution). Dans le cas des images acquises par satellite, le débruitage est suivi d'une déconvolution et d'une fusion.

Le procédé selon l'invention peut présenter une ou plusieurs des caractéristiques ci-dessous, prises dans toutes leurs combinaisons techniquement acceptables.

L'image numérique à restaurer a été obtenue par application d'une compression à l'image initiale acquise pour obtenir une image initiale compressée, puis d'une décompression de l'image initiale compressée.

La restitution de bruit instrumental d'acquisition est effectuée en lien avec la décompression de l'image initiale compressée.

L'image numérique à restaurer est une image multispectrale composée d'une pluralité d'images acquises dans des bandes spectrales différentes et les étapes d'obtention d'une image numérique intermédiaire et de débruitage de l'image numérique intermédiaire sont appliquées à chacune des images acquises dans des bandes spectrales différentes, et l'étape de déconvolution est appliquée à au moins une des images numériques intermédiaires.

Le procédé comporte en outre une étape de fusion d'images appliquée après débruitage ou après déconvolution, pour obtenir une image restaurée finale.

Le bruit instrumental d'acquisition est modélisé par un modèle paramétré par deux coefficients, les coefficients ayant des valeurs utilisées lors de la restitution de bruit instrumental, et l'étape de débruitage comporte l'application d'une transformation de stabilisation de la variance paramétrée par les deux coefficients caractérisant ledit modèle paramétré du bruit instrumental d'acquisition.

L'image numérique à restaurer est une image multispectrale composée d'une pluralité d'images acquises dans des bandes spectrales différentes, et des valeurs des coefficients du modèle de bruit instrumental d'acquisition dépendant de la bande spectrale d'acquisition sont déterminées pour chaque bande spectrale d'acquisition.

L'étape de débruitage comporte les sous-étapes suivantes :

- application de la transformation de stabilisation de la variance pour obtenir une image intermédiaire stabilisée,
- application d'un procédé de débruitage de bruit stationnaire sur l'image intermédiaire stabilisée,
- application d'une transformation inverse stabilisation de la variance sur l'image numérique résultant de l'étape d'application d'un procédé de débruitage pour obtenir une image numérique intermédiaire débruitée.

Dans un mode de réalisation, la transformation de stabilisation de la variance est une transformation d'Anscombe.

L'étape d'obtention d'une image numérique intermédiaire comprend des sous-étapes de :

- obtention, par application d'une transformation dite transformation de compression, d'une représentation de l'image numérique à restaurer par une pluralité de blocs de coefficients, chaque bloc de coefficients correspondant à un bloc de pixels d'image numérique à restaurer,
- pour au moins un coefficient traité d'un bloc de coefficients :

  - calcul d'un seuil de bruit en fonction d'une valeur représentative du modèle de bruit instrumental d'acquisition d'image,
  - comparaison de la valeur absolue dudit coefficient traité au seuil de bruit, et,

  • lorsque la valeur absolue du coefficient traité est supérieure ou égale audit seuil de bruit, ledit coefficient est laissé inchangé,
  • lorsque la valeur absolue du coefficient traité est inférieure audit seuil de bruit, remplacement de la valeur coefficient traité par une valeur de bruit dépendant de ladite valeur représentative d'un modèle de bruit d'acquisition d'image.

Le bruit instrumental d'acquisition est modélisé par un modèle paramétré définissant l'écart-type de bruit σ par $\sigma = \sqrt{a^2 + b \cdot s}$, où a et b sont des coefficients dudit modèle et s est une valeur de coefficient représentatif d'une moyenne des valeurs associées aux pixels d'un bloc de pixels d'image numérique considéré.

Selon un autre aspect, l'invention concerne un dispositif de restauration d'image numérique selon la revendication 12.

Selon un mode de réalisation, dans lequel l'image numérique à restaurer est une image multispectrale composée d'une pluralité d'images acquises dans des bandes spectrales différentes, le dispositif comporte en outre un module de fusion d'images adapté à appliquer une fusion après débruitage ou après déconvolution, pour obtenir une image restaurée finale.

Selon un autre aspect, l'invention concerne un programme d'ordinateur selon la revendication 11.

D'autres caractéristiques et avantages de l'invention ressortiront de la description qui en est donnée ci-dessous, à titre indicatif et nullement limitatif, en référence aux figures annexées, parmi lesquelles :

- la figure 1 illustre schématiquement les principaux modules d'un système de traitement d'images dans lequel est mise en œuvre l'invention ;

- la figure 2 est un synoptique des principaux modules d'un dispositif de restauration selon un mode de réalisation ;
- la figure 3 est un schéma représentant les blocs fonctionnels d'un dispositif programmable apte à mettre en œuvre l'invention ;
- la figure 4 est un synoptique des principales étapes d'un procédé de restauration selon un premier mode de réalisation de l'invention ;
- la figure 5 est un synoptique des principales étapes d'un procédé de restauration selon un deuxième mode de réalisation de l'invention.

L'invention s'applique notamment dans le contexte de l'imagerie satellitaire, mais n'est pas limitée à ce domaine. Elle peut également s'appliquer à la restauration de tout type d'images numériques présentant du bruit d'acquisition et de compression.

L'invention s'applique au traitement d'images numériques. Dans la description qui suit, le terme « image » est utilisé pour désigner une image numérique.

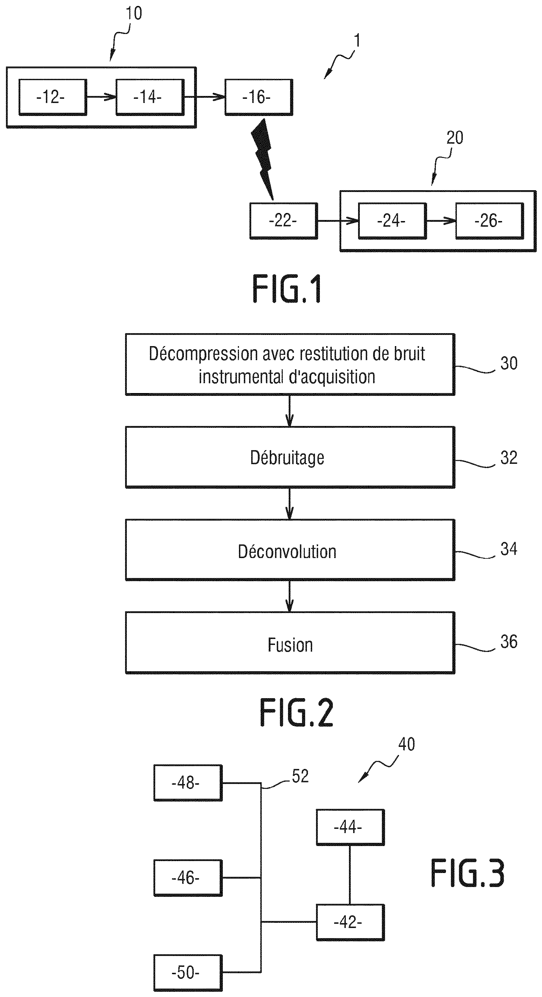

La figure 1 illustre schématiquement un système de traitement d'images 1, comprenant une première partie 10 d'acquisition d'images et une deuxième partie 20 d'exploitation des images acquises.

Dans le cas de l'acquisition par satellite, la première partie 10 est implémentée à bord d'un satellite, alors que la deuxième partie 20 est par exemple implémentée dans un centre de traitement d'images au sol.

La première partie d'acquisition 10 comporte un dispositif d'acquisition d'images 12, ayant un bruit instrumental d'acquisition associé.

Par exemple, le dispositif d'acquisition d'images 12 comporte une pluralité de barrettes de détecteurs d'images fixées sur un satellite. Ce dispositif acquiert des images lors d'un défilement du satellite au-dessus d'un paysage, par balayage de fauchée (ou « pushbroom » en anglais). Dans un mode de réalisation, le dispositif d'acquisition d'images 12 est de type multispectral et permet l'acquisition d'images multispectrales dans plusieurs bandes spectrales étroites différentes, ainsi que d'une image panchromatique de large bande spectrale, ayant une résolution spatiale plus élevée que les images multispectrales.

En variante, le dispositif d'acquisition d'images est de type matriciel comprenant une matrice de détecteurs CCD ou CMOS.

Ainsi, le dispositif d'acquisition d'images 12 permet d'acquérir au moins une image numérique.

Une image numérique composée d'une ou plusieurs matrices d'échantillons d'image ou pixels, chaque échantillon d'image ayant une valeur de radiométrie associée. Ce domaine de représentation est appelé domaine spatial. La résolution spatiale d'une image numérique est définie par le nombre de pixels par ligne et par colonne de la matrice de représentation.

De préférence, le dispositif d'acquisition d'images 12 est adapté à acquérir des images dans une pluralité de bandes spectrales, ou images couleur, formées d'autant de matrices de pixels que de bandes spectrales d'acquisition.

L'image numérique initiale acquise subit ensuite une compression selon un procédé de compression donné, effectuée par le module de compression 14, et les données numériques relatives à l'image numérique compressée sont mémorisées, par exemple dans un fichier, et/ou transmises pour exploitation ultérieure.

Il existe plusieurs procédés de compression connus et standardisés, par exemple JPEG ou JPEG2000 pour les images fixes. Chaque standard de compression met en œuvre une transformation de l'image numérique, appelée ci-après transformation de compression. Par exemple, JPEG met en œuvre une transformation en cosinus discrète ou DCT par blocs, JPEG2000 met en œuvre une transformation en ondelettes ou DWT par sous-bandes.

La première partie d'acquisition 10 est reliée à un module de transmission 16, apte à transmettre des données numériques vers la deuxième partie 20 de réception et exploitation des images numériques acquises. Le module de transmission 16 effectue par exemple une transmission radio.

La deuxième partie 20 du système est reliée à un module de réception 22, apte à recevoir des données numériques du module de transmission 16.

Le module de réception 22, par exemple une antenne de réception satellite, est relié à un module 24 de décompression, adapté à effectuer une décompression correspondante pour obtenir une image numérique exploitable.

Selon un mode de réalisation l'invention, le module 24 effectue une décompression avec restitution du bruit instrumental d'acquisition, permettant d'obtenir une image numérique intermédiaire.

Par exemple, la restitution de bruit instrumental pour des images ayant subi une compression décrite dans la demande de brevet FR 3 025 640 est appliquée.

Dans un mode de réalisation, le module 24 de décompression effectue une décompression standard, et la restitution de bruit instrumental est effectuée ultérieurement par le module 26 de restauration d'image, avec ou sans connaissance du procédé de compression/décompression appliqué. La restitution de bruit instrumental utilise un modèle de bruit qui est également utilisé par le module 26 de restauration d'image.

Le module de restauration 26, met en œuvre un procédé de restauration d'images numériques selon l'invention.

Selon une variante, les modules de compression 14 et de décompression 24 sont optionnels, le module 26 de restauration d'images effectuant néanmoins une restitution de bruit instrumental sur l'image numérique à restaurer.

L'image numérique intermédiaire est donc une image numérique dans le domaine spatial, obtenue par restitution de bruit instrumental sur l'image numérique à restaurer.

L'image numérique à restaurer est obtenue soit par application d'une compression à l'image initiale acquise pour obtenir une image initiale compressée, puis d'une décompression de l'image initiale compressée, soit il s'agit simplement de l'image numérique initiale acquise.

La figure 2 est un synoptique des modules mis en œuvre par le module de restauration 26 selon un mode de réalisation.

Le module de restauration 26 est adapté à mettre en œuvre l'obtention 30 d'une image numérique intermédiaire par décompression avec restitution du bruit instrumental d'acquisition, le débruitage 32 sur l'image numérique intermédiaire pour obtenir une image numérique intermédiaire débruitée et la déconvolution 34, suivie optionnellement d'une fusion 36 dans le cas du traitement d'images multispectrales, de l'image numérique débruitée pour obtenir une image numérique restaurée finale.

Des modes de réalisation détaillés de la décompression avec restitution du bruit instrumental d'acquisition, du débruitage et de la déconvolution/fusion seront décrits ci-après.

Un tel module de restauration d'images 26 est par exemple mis en œuvre par un ensemble d'instructions de programme informatique, exécutables par un dispositif programmable.

La figure 3 illustre de manière schématique les principaux blocs fonctionnels d'un dispositif programmable, par exemple un ordinateur, une station de travail, adapté à mettre en œuvre un procédé de restauration selon l'invention.

Un dispositif programmable 40 adapté à mettre en œuvre le procédé de l'invention comprend une unité centrale de traitement 42, par exemple un processeur (CPU), apte à exécuter des opérations préprogrammées ou des instructions de programme informatique lorsque le dispositif 40 est mis sous tension.

Dans un mode de réalisation, une unité centrale de traitement multi-processeurs est utilisée, permettant d'effectuer des calculs parallèles. Le dispositif 40 comporte également des moyens de stockage d'informations 44, par exemple des registres, aptes à stocker des instructions de code exécutable permettant la mise en œuvre de programmes comportant des instructions de code aptes à mettre en œuvre le procédé selon l'invention.

Le dispositif 40 comporte des moyens de commande 46 permettant de mettre à jour des paramètres et de recevoir des commandes d'un opérateur. Lorsque le dispositif programmable 40 est un dispositif embarqué, les moyens de commande 46 comprennent un dispositif de télécommunication permettant de recevoir des commandes et des valeurs de paramètres à distance.

Alternativement et de manière optionnelle, les moyens de commande 46 sont des moyens de saisie de commandes d'un opérateur, par exemple un clavier.

De manière optionnelle, le dispositif programmable 40 comprend un écran 48 et un moyen supplémentaire de pointage 50, tel une souris.

Les divers blocs fonctionnels du dispositif 40 décrits ci-dessus sont connectés via un bus de communication 52.

En variante, les procédés de l'invention sont mis en œuvre par des processeurs graphiques ou GPU, avec une architecture matérielle parallélisée.

En variante, les procédés de l'invention sont mis en œuvre par des dispositifs électroniques de type circuits logiques programmables, tels des cartes électroniques à base de FPGA ou ASIC, ou puces intégrables dans des appareils électroniques comme des téléphones portables ou des appareils photos.

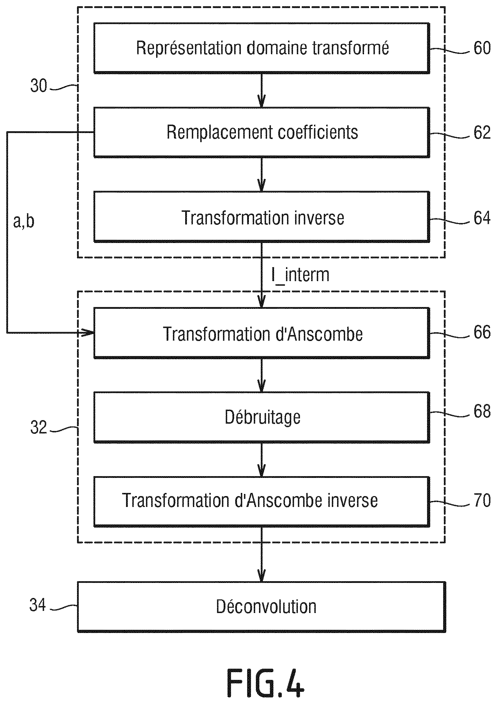

La figure 4 est un synoptique des principales étapes d'un procédé de restauration d'image numérique dans un premier mode de réalisation de l'invention.

En entrée, le procédé reçoit une image numérique d'entrée qui correspond à l'image numérique à restaurer après compression.

La première étape de décompression 30 avec restitution de bruit instrumental d'acquisition se décompose en trois sous-étapes 60, 62, 64.

Lors de la première étape 60, on obtient une représentation de l'image numérique d'entrée dans le domaine de la transformation de compression, appelé également domaine transformé.

Il est à noter que l'image numérique d'entrée peut être une image numérique représentée dans le domaine spatial, ou être fournie dans une représentation codée après compression.

Lorsque l'image numérique d'entrée est représentée dans le domaine spatial, on applique la transformation de compression correspondante, par exemple DCT ou DWT, pour obtenir une représentation de l'image par des blocs de coefficients dans le domaine transformé.

Lorsque l'image numérique d'entrée est représentée par des données compressées, on applique un décodage selon le standard de compression utilisé, pour obtenir une représentation de l'image par des blocs de coefficients, appelée représentation dans le domaine transformé.

Lorsque l'image numérique d'entrée est représentée dans le domaine spatial, l'image numérique d'entrée peut être issue d'une compression suivie d'une décompression, mais le procédé de compression/décompression n'est pas connu à partir de l'image numérique d'entrée. Dans ce cas, on applique à l'étape 60 une transformation de compression choisie, par exemple une DCT par blocs ou une transformation en ondelettes sur un nombre de niveaux de décomposition choisi. Dans ce cas, la transformation de compression appliquée est choisie à l'étape 60, et non pas en fonction du procédé de compression/décompression appliqué précédemment à l'image initiale qui n'est pas connu à ce stade.

L'étape 60 est suivie d'une étape 62 de modification des coefficients en fonction d'une valeur de seuil calculée en fonction d'un modèle paramétré de bruit instrumental d'acquisition.

De préférence, le modèle paramétré du bruit instrumental définit l'écart-type de bruit σ par :

$$\sigma = \sqrt{a^2 + b \cdot s} \qquad (EQ\ 1)$$

où a et b sont des coefficients dudit modèle de bruit instrumental et s est une valeur de coefficient dans le domaine transformé représentatif de la moyenne des valeurs d'échantillons d'un bloc traité de l'image numérique.

Par exemple, s est le coefficient DC du bloc traité lorsque la transformation de compression est une DCT par bloc, et s est le coefficient ondelette de basse fréquence correspondant spatialement au bloc traité pour une transformation en ondelettes discrètes DWT.

Selon une autre variante et dans le cas d'un compresseur basé sur la transformation en ondelettes discrètes DWT, le rebruitage est affiné en l'appliquant à chaque étape de la recomposition des coefficients d'ondelettes, pour chaque niveau de recomposition, la valeur s représentant alors le coefficient basse fréquence du niveau de recomposition considéré et le rebruitage concernant les coefficients d'ondelettes appartenant aux trois sous-bandes haute fréquence correspondant à la sous-bande basse fréquence du niveau de recomposition considéré. Lorsque le dispositif d'acquisition est connu, les valeurs des coefficients a et b sont connues et mémorisées préalablement à la mise en œuvre du procédé.

Par exemple, pour le satellite PLEIADES-1A avec une configuration de 13 étages TDI, les valeurs a et b en bande panchromatique, dans le domaine spatial, sont égales respectivement à 2.267 et 0.0393 pour un signal s exprimé en « pas » codeurs (en anglais « digital count»). Ces valeurs sont adaptées, le cas échéant, en fonction de la transformation de compression pour l'utilisation du modèle de bruit dans le domaine transformé, comme expliqué ci-dessus.

Dans le cas d'une acquisition multispectrale d'images, une paire de valeurs (a,b) est estimée et mémorisée pour chaque bande spectrale d'acquisition.

Alternativement, les valeurs des coefficients a et b sont fournies par un opérateur, ou estimées à partir d'une ou plusieurs images acquises par un dispositif d'acquisition donné ou à partir d'une ou plusieurs images quelconques.

On définit un seuil de bruit $S_{bruit}$ en fonction d'un facteur de proportionnalité de bruit $K_d$, et un facteur de proportionnalité de reconstruction $K_r$

Le seuil de bruit $S_{bruit}$ est obtenu à partir de l'écart-type σ du bruit d'acquisition:

$$S_{bruit} = K_d \cdot \sigma \qquad (EQ\ 2)$$

Où $K_d$ est le facteur de proportionnalité de bruit constant fourni par l'utilisateur.

$K_d$ pourra valoir typiquement 0,5 ou 1, et plus généralement être compris entre 0 et 3.

De manière plus générale, le seuil de bruit $S_{bruit}$ est obtenu par application d'une fonction f(), qui n'est pas nécessairement linéaire :

$$S_{bruit} = f(K_d, \sigma) \qquad (EQ\ 3)$$

Pour chaque bloc du domaine transformé considéré, la valeur absolue de chaque coefficient noté $C_{i,j}$ du bloc traité est comparée au seuil de bruit $S_{bruit}$. Lorsque la valeur absolue du coefficient $C_{i,j}$ est supérieure au seuil de bruit, elle est laissée inchangée. Lorsque la valeur absolue du coefficient $C_{i,j}$ est inférieure au seuil de bruit $S_{bruit}$, le coefficient $C_{i,j}$ est remplacé par une valeur de bruit local fonction de la valeur représentative du modèle de bruit d'acquisition associée au bloc traité.

De manière générale, on peut écrire $C'_{ij} = g(K_r, \sigma)$.

Par exemple , la fonction g() est donnée par:

$$C'_{ij} = sign(C_{ij}) \cdot K_r \cdot \sigma \cdot \left| rand \right| \qquad (EQ\ 4)$$

Où :

$sign(C_{ij})$ est le signe du coefficient $C_{i,j}$ ;
$K_r$ est le facteur de proportionnalité de reconstruction, qui vaut typiquement 1 mais peut être plus généralement compris entre 0 et 3,
$rand$ est une valeur obtenue par tirage pseudo-aléatoire selon une loi de distribution prédéterminée, par exemple Gaussienne, de variance égale à 1. La valeur absolue de la valeur rand, notée $|rand|$, est utilisée dans la formule de l'équation (EQ 4).

De préférence, tous les blocs de coefficients de l'image numérique transformée sont traités.

On applique ensuite, lors d'une étape d'application de transformation inverse 64, la transformation de compression inverse pour obtenir une image numérique intermédiaire.

Avantageusement, cette image numérique intermédiaire ne présente plus d'artefacts de compression, mais présente des artefacts de bruit instrumental d'acquisition analogues à ceux introduits par le dispositif d'acquisition d'images. En d'autres termes, l'image en sortie de traitement possède un bruit ayant les mêmes caractéristiques que le bruit instrumental présent dans l'image avant compression.

La première étape 30 de décompression avec restitution du bruit instrumental est suivie d'une étape 32 de débruitage appliqué sur l'image intermédiaire.

L'étape 32 de débruitage comporte les sous-étapes 66 à 68.

La sous-étape 66 consiste à appliquer une transformation de stabilisation de la variance, qui est de préférence la transformation d'Anscombe, à l'image intermédiaire préalablement obtenue. On obtient alors une image intermédiaire stabilisée.

Selon des variantes possibles, d'autres transformations de stabilisation de la variance, par exemple la transformation de Freeman-Tukey, sont applicables.

La transformation d'Anscombe est paramétrée par deux coefficients a, b. Avantageusement, la valeur des coefficients (a,b) définissant la transformation d'Anscombe appliquée est la même que celle des coefficients du modèle de bruit instrumental observé.

La transformation d'Anscombe, appliquée dans le domaine spatial, est définie par :

$$A(p) = \frac{2}{b} \cdot \sqrt{bp + \frac{3}{8}b^2 + a^2} \quad (\text{EQ 5}).$$

Où a et b sont des coefficients, de même valeur que les coefficients du modèle de bruit instrumental d'acquisition défini ci-dessus, dans le domaine spatial, et p est la valeur de radiométrie d'un pixel traité.

Comme mentionné ci-dessus, dans le cas de l'acquisition multispectrale, chaque bande spectrale a une paire de valeurs de coefficients (a,b) associée.

L'étape 66 d'application de la transformation de stabilisation est suivie d'une étape 68 d'application d'une méthode de débruitage de bruit stationnaire, elle-même suivie d'une étape 70 d'application de la transformation de stabilisation de la variance inverse, pour obtenir une image numérique intermédiaire débruitée.

On appelle bruit stationnaire un bruit dont l'écart-type est sensiblement constant sur l'image.

La transformation d'Anscombe inverse est donnée par :

$$A^{-1}(p) = \frac{1}{4}bp^2 - \frac{3}{8}b - \frac{a^2}{b} \quad (\text{EQ 6}).$$

L'étape 32 de débruitage est suivie d'une étape 34 de déconvolution pour obtenir l'image numérique restaurée. La déconvolution permet d'améliorer la netteté de l'image obtenue.

Toute méthode de déconvolution connue est applicable. Par exemple, on applique une transformation de Fourier, un filtrage de déconvolution dans le domaine de Fourier et une transformation de Fourrier inverse.

Le filtrage de déconvolution utilisé est lié à la fonction de transfert optique caractéristique du dispositif d'acquisition d'images, qui est mesurée et connue, de la même manière que les paramètres a et b de bruit instrumental.

A titre d'exemple non limitatif on peut appliquer la méthode de déconvolution décrite dans l'article « Restoration technique for Pleiades-HR panchromatic images » de C. Latry et al, publié dans International Archives of the Photogrammetry, Remote Sensing and Spatial Information Sciences, Volume XXXIX-B1, 2012.

De préférence, la méthode de débruitage de bruit stationnaire appliquée à l'étape 68 est une méthode bayésienne non locale, comme par exemple la méthode décrite dans l'article de Marc Lebrun, Antoni Buades, et Jean-Michel Morel, « A Nonlocal Bayesian Image Denoising Algorithm» publié dans SIAM Journal on Imaging Sciences, vol. 6, no. 3, pages 1665-1668. Le principe de la méthode NL-Bayes est de remplacer la valeur p d'un pixel p(x,y) par une moyenne pondérée des valeurs d'autres pixels p' de l'image traitée, choisis sur un critère de distance entre voisinages de taille donnée.

En variante, d'autres méthodes de débruitage de bruit stationnaire connues, comme par exemple la méthode connue sous l'acronyme BM3D pour « block matching and 3D filtering » ou un débruitage par apprentissage de type « deep learning », sont également applicables.

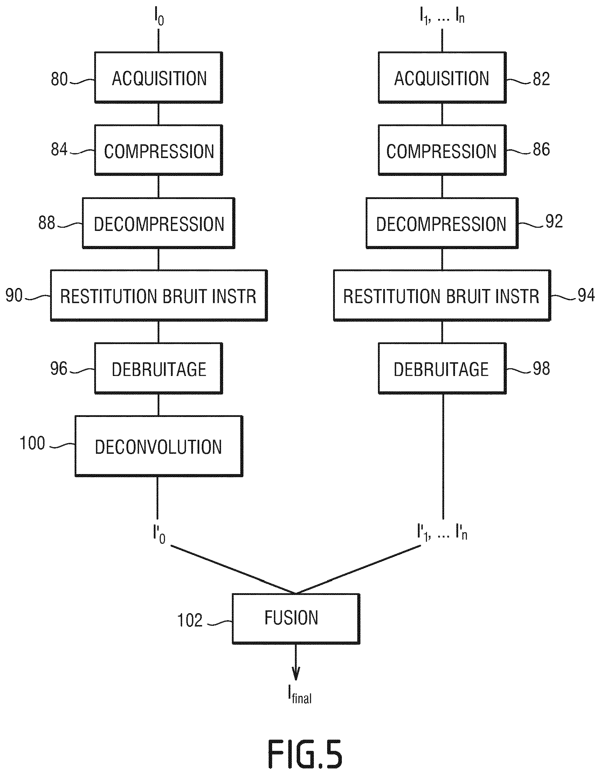

La figure 5 est un synoptique des principales étapes d'un procédé de restauration selon un deuxième mode de réalisation de l'invention, appliqué en particulier aux images acquises par satellite.

Dans ce mode de réalisation les images d'entrée sont d'une part l'image $I_0$ qui est l'image panchromatique et n images $I_1$ à $I_n$, chacune des images $I_1$ à $I_n$ correspondant à une bande spectrale d'acquisition donnée.

Les images $I_1$ à $I_n$ sont appelées ci-après images multispectrales, étant entendu que chacune de ces images correspond à une bande spectrale d'acquisition étroite donnée.

Les images $I_1$ à $I_n$ ont une résolution spatiale plus faible que la résolution spatiale de l'image panchromatique $I_0$. Typiquement le rapport de résolution est 4 pour l'imagerie satellitaire.

Ces images sont acquises lors des étapes d'acquisition 80, 82.

Les étapes d'acquisition d'images sont suivies d'étapes 84, 86 de compression, selon un procédé de compression prédéterminé, utilisant une transformation de compression comme expliqué ci-dessus.

Par exemple, dans un mode de réalisation les étapes d'acquisition 80, 82 et de compression 84, 86 sont effectuées à bord d'un satellite.

Ces étapes 84, 86 sont suivies d'étapes de décompression avec restitution de bruit instrumental 88, 90 pour l'image panchromatique $I_0$, et 92, 94 pour chacune des images multispectrales $I_1$ à $I_n$. La décompression avec restitution de bruit instrumental est effectuée de manière analogue à ce qui a été décrit en référence à la figure 4 pour la mise en œuvre de l'étape 30.

A l'issue des étapes de décompression avec restitution de bruit instrumental 88, 90, 92, 94 on obtient une image panchromatique intermédiaire $I_{0\_interm}$ et des images multipectrales intermédiaires $I_{1\_interm}$ à $I_{n\_interm}$.

La décompression avec restitution de bruit instrumental est suivie d'une étape de débruitage 96 pour l'image panchromatique intermédiaire $I_{0\_interm}$ et d'une étape de débruitage 98 pour chaque image multispectrale intermédiaire $I_{1\_interm}$ à $I_{n\_interm}$.

Les étapes de débruitage respectives 96, 98 sont analogues à celles décrites en référence à la figure 4.

L'étape de débruitage 98 comprend, dans un mode de réalisation, pour chaque image multispectrale intermédiaire $I_{k\_interm}$, l'application d'une transformation de stabilisation de la variance, par exemple la transformation d'Anscombe paramétrée avec les coefficients a,b du modèle de bruit instrumental pour la bande spectrale associée à $I_k$, puis l'application d'une méthode de débruitage de bruit stationnaire, et enfin l'application de la transformation de stabilisation de la variance inverse.

A l'issue de l'étape de débruitage 98 on obtient des images multispectrales restaurées $I'_1$ à $I'_n$.

De manière analogue, l'étape de débruitage 96 appliquée à l'image panchromatique intermédiaire $I_{0\_interm}$ comprend, dans un mode de réalisation, l'application d'une transformation de stabilisation de la variance, par exemple la transformation d'Anscombe paramétrée avec les coefficients a, b du modèle de bruit instrumental pour la bande panchromatique, puis l'application d'une méthode de débruitage de bruit stationnaire, et enfin l'application de la transformation de stabilisation de la variance inverse.

L'étape 96 de débruitage est suivie d'une étape de déconvolution 100, qui permet d'obtenir une image panchromatique restaurée $I'_0$.

Enfin, les étapes 98 et 100 sont suivies d'une étape 102 de fusion de tout ou partie des images restaurées $I'_0$, $I'_1$ à $I'_n$.

De préférence, on applique la méthode de fusion d'images multirésolution décrite dans le brevet français publié sous le numéro FR2994007 de S. Fourest et C. Latry.

En variante, on peut appliquer une autre méthode de fusion d'images multirésolution connue de l'homme du métier.

On obtient une image finale couleur restaurée, $I_{final}$, dont la qualité visuelle est améliorée par rapport à une image obtenue par un procédé classique de compression/décompression, restauration et fusion.

Selon une variante du mode de réalisation de la figure 5, l'étape de déconvolution 100 est appliquée également à chacune des images multispectrales issues de l'étape de débruitage 98, de manière analogue à l'application de la déconvolution après l'étape de débruitage 96, de manière à améliorer la netteté des images multispectrales.

Avantageusement, l'application d'une transformation de stabilisation de variance, permet de transformer le bruit instrumental restitué sur les images en un bruit dont la variance est indépendante du signal d'image, ce qui permet une utilisation d'un algorithme de débruitage de bruit stationnaire.

## Revendications

1. Procédé implémenté par un dispositif programmable,

   de restauration d'image numérique, l'image numérique à restaurer étant issue d'une image initiale acquise par un dispositif d'acquisition d'image ayant un bruit instrumental d'acquisition associé,
   dans lequel l'image numérique à restaurer a été obtenue par application d'une compression à l'image initiale acquise pour obtenir une image initiale compressée, puis d'une décompression de l'image initiale compressée,
   **caractérisé en ce qu'**il comporte les étapes suivantes :

   - obtention (30, 60-64, 80-94) d'une image numérique intermédiaire, l'image numérique intermédiaire étant une image numérique obtenue par restitution du bruit instrumental d'acquisition sur l'image numérique à restaurer,
   - débruitage (32, 66-70, 96, 98) de l'image numérique intermédiaire pour obtenir une image numérique intermédiaire débruitée,
   - déconvolution (34, 100) de l'image numérique intermédiaire débruitée pour obtenir une image numérique restaurée.

2. Procédé de restauration d'image numérique selon la revendication 1, dans lequel ladite restitution de bruit instrumental d'acquisition est effectuée sur la base d'un modèle de bruit comprenant un paramètre est défini en fonction d'un coefficient de la décompression de l'image initiale compressée.

3. Procédé de restauration d'image numérique selon l'une des revendications 1 à 2, dans lequel l'image numérique à restaurer est une image multispectrale composée d'une pluralité d'images acquises dans des bandes spectrales différentes et dans lequel les étapes d'obtention (80-94) d'une image numérique intermédiaire et de débruitage (96, 98) de l'image numérique intermédiaire sont appliquées à chacune des images acquises dans des bandes spectrales différentes, et l'étape de déconvolution (100) est appliquée à au moins une des images numériques intermédiaires.

4. Procédé de restauration d'image numérique selon la revendication 3, comportant en outre une étape de fusion (102) d'images appliquée après débruitage (96, 98) ou après déconvolution (100), pour obtenir une image restaurée finale.

**5.** Procédé de restauration d'image numérique selon l'une des revendications 1 à 4, dans lequel le bruit instrumental d'acquisition est modélisé par un modèle paramétré par deux coefficients, les coefficients ayant des valeurs utilisées lors de la restitution de bruit instrumental, et dans lequel l'étape de débruitage comporte l'application d'une transformation de stabilisation de la variance paramétrée par les deux coefficients caractérisant ledit modèle paramétré du bruit instrumental d'acquisition.

**6.** Procédé de restauration d'image numérique selon la revendication 5, dans lequel l'image numérique à restaurer est une image multispectrale composée d'une pluralité d'images acquises dans des bandes spectrales différentes, et dans lequel des valeurs des coefficients du modèle de bruit instrumental d'acquisition dépendent de la bande spectrale d'acquisition et sont déterminées pour chaque bande spectrale d'acquisition.

**7.** Procédé de restauration d'image numérique selon l'une quelconque des revendications 5 ou 6, dans lequel l'étape de débruitage comporte les sous-étapes suivantes :

- application (66) de la transformation de stabilisation de la variance pour obtenir une image intermédiaire stabilisée,
- application (68) d'un procédé de débruitage de bruit stationnaire sur l'image intermédiaire stabilisée,
- application (70) d'une transformation inverse de ladite transformation de stabilisation de la variance sur l'image numérique résultant de l'étape d'application d'un procédé de débruitage pour obtenir une image numérique intermédiaire débruitée.

**8.** Procédé de restauration d'image numérique selon la revendication 7, dans lequel ladite transformation de stabilisation de la variance est une transformation d'Anscombe,

**9.** Procédé de restauration d'image numérique selon l'une des revendications 1 à 8, dans lequel l'étape d'obtention d'une image numérique intermédiaire comprend des sous-étapes de :

- obtention (60), par application d'une transformation dite transformation de compression, d'une représentation de l'image numérique à restaurer par une pluralité de blocs de coefficients, chaque bloc de coefficients correspondant à un bloc de pixels d'image numérique à restaurer,
- pour au moins un coefficient traité d'un bloc de coefficients :

- calcul d'un seuil de bruit en fonction d'une valeur représentative du modèle de bruit instrumental d'acquisition d'image,
- comparaison de la valeur absolue dudit coefficient traité au seuil de bruit, et,
• lorsque la valeur absolue du coefficient traité est supérieure ou égale audit seuil de bruit, ledit coefficient est laissé inchangé,
• lorsque la valeur absolue du coefficient traité est inférieure audit seuil de bruit, remplacement (62) de la valeur coefficient traité par une valeur de bruit dépendant de ladite valeur représentative d'un modèle de bruit d'acquisition d'image.

**10.** Procédé de restauration d'image numérique selon l'une quelconque des revendications 1 à 9, dans lequel le bruit instrumental d'acquisition est modélisé par un modèle paramétré définissant l'écart-type de bruit σ par $\sigma = \sqrt{a^2 + b \cdot s}$, où a et b sont des coefficients dudit modèle et s est une valeur de coefficient représentatif d'une moyenne des valeurs associées aux pixels d'un bloc de pixels d'image numérique considéré.

**11.** Programme d'ordinateur comportant des instructions pour mettre en œuvre les étapes d'un procédé de restauration d'image numérique selon l'une des revendications 1 à 10 lors de l'exécution du programme par un processeur d'un dispositif programmable.

**12.** Dispositif de restauration d'image numérique, l'image numérique à restaurer étant issue d'une image initiale acquise par un dispositif d'acquisition d'image ayant un bruit instrumental d'acquisition associé, dans lequel l'image numérique à restaurer a été obtenue par application d'une compression à l'image initiale acquise pour obtenir une image initiale compressée, puis d'une décompression de l'image initiale compressée,
**caractérisé en ce qu'**il comporte des modules, mis en œuvre par un processeur d'un dispositif programmable, adaptés à :

- obtenir une image numérique intermédiaire avec restitution du bruit instrumental d'acquisition,
- débruiter l'image numérique intermédiaire pour obtenir une image numérique intermédiaire débruitée,

- déconvoluer l'image numérique intermédiaire débruitée pour obtenir une image numérique restaurée.

13. Dispositif de restauration d'image numérique selon la revendication 12, dans lequel l'image numérique à restaurer est une image multispectrale composée d'une pluralité d'images acquises dans des bandes spectrales différentes, comportant en outre un module de fusion d'images adapté à appliquer une fusion après débruitage ou après déconvolution, pour obtenir une image restaurée finale.

**Patentansprüche**

1. Verfahren, das durch eine programmierbare Vorrichtung zur Wiederherstellung eines digitalen Bildes implementiert wird, wobei das wiederherzustellende digitale Bild aus einem Anfangsbild stammt, das von einer Bilderfassungsvorrichtung, die ein zugeordnetes instrumentelles Erfassungsrauschen aufweist, erfasst wurde,

wobei das wiederherzustellende digitale Bild durch Anwenden einer Komprimierung auf das erfasste Anfangsbild erhalten wurde, um ein komprimiertes Anfangsbild zu erhalten, und anschließend durch Dekomprimieren des komprimierten Anfangsbildes,
**dadurch gekennzeichnet, dass** es die folgenden Schritte umfasst:

- Erhalten (30, 60-64, 80-94) eines digitalen Zwischenbildes, wobei das digitale Zwischenbild ein digitales Bild ist, das durch Wiedergabe des instrumentellen Erfassungsrauschens an das wiederherzustellende digitale Bild erhalten wird,
- Entrauschen (32, 66-70, 96, 98) des digitalen Zwischenbildes, um ein entrauschtes digitales Zwischenbild zu erhalten,
- Dekonvolutieren (34, 100) des entrauschten digitalen Zwischenbildes, um ein wiederhergestelltes digitales Bild zu erhalten.

2. Verfahren zur Wiederherstellung eines digitalen Bildes nach Anspruch 1, wobei die Wiedergabe des instrumentellen Erfassungsrauschens auf der Grundlage eines Rauschmodells durchgeführt wird, das einen Parameter umfasst, der in Abhängigkeit von einem Koeffizienten der Dekomprimierung des komprimierten Anfangsbildes definiert ist.

3. Verfahren zur Wiederherstellung eines digitalen Bildes nach einem der Ansprüche 1 bis 2, wobei das wiederherzustellende digitale Bild ein multispektrales Bild ist, das aus einer Vielzahl von Bildern zusammengesetzt ist, die in verschiedenen Spektralbändern erfasst wurden, und wobei die Schritte (80-94) des Erhaltens eines digitalen Zwischenbildes und des Entrauschens (96, 98) des digitalen Zwischenbildes auf jedes der in verschiedenen Spektralbändern erfassten Bilder angewendet werden, und der Schritt (100) des Dekonvolutieren auf mindestens eines der digitalen Zwischenbilder angewendet wird.

4. Verfahren zur Wiederherstellung eines digitalen Bildes nach Anspruch 3, ferner umfassend einen Schritt (102) des Zusammenführens von Bildern, die nach dem Entrauschen (96, 98) oder nach dem Dekonvolutieren (100) angewendet werden, um ein endgültiges wiederhergestelltes Bild zu erhalten.

5. Verfahren zur Wiederherstellung eines digitalen Bildes nach einem der Ansprüche 1 bis 4, wobei die Wiedergabe des instrumentellen Erfassungsrauschens durch ein Modell modelliert wird, das durch zwei Koeffizienten parametriert ist, wobei die Koeffizienten Werte aufweisen, die bei der Wiedergabe des instrumentellen Rauschens verwendet werden, und wobei der Schritt des Entrauschens die Anwendung einer durch die beiden Koeffizienten, die das parametrierte Modell des instrumentellen Erfassungsrauschens kennzeichnen, parametrierten Varianzstabilisierungstransformation umfasst.

6. Verfahren zur Wiederherstellung eines digitalen Bildes nach Anspruch 5, wobei das wiederherzustellende digitale Bild ein multispektrales Bild ist, das aus einer Vielzahl von Bildern zusammengesetzt ist, die in verschiedenen Spektralbändern erfasst wurden, und wobei Werte der Koeffizienten des instrumentellen Erfassungsrauschmodells vom Erfassungsspektralband abhängen und für jedes Erfassungsspektralband bestimmt werden.

7. Verfahren zur Wiederherstellung eines digitalen Bildes nach einem der Ansprüche 5 oder 6, wobei der Schritt des Entrauschens die folgenden Unterschritte umfasst:

- Anwenden (66) der Varianzstabilisierungstransformation, um ein stabilisiertes Zwischenbild zu erhalten,
- Anwenden (68) eines Verfahrens zum Entrauschen des stationären Rauschens auf das stabilisierte Zwischenbild,
- Anwenden (70) einer umgekehrten Transformation der Varianzstabilisierungstransformation auf das digitale Bild, die sich aus dem Schritt des Anwendens eines Entrauschungsverfahrens ergibt, um ein entrauschtes digitales Zwischenbild zu erhalten.

**8.** Verfahren zur Wiederherstellung eines digitalen Bildes nach Anspruch 7, wobei die Varianzstabilisierungstransformation eine Anscombe-Transformation ist,

**9.** Verfahren zur Wiederherstellung eines digitalen Bildes nach einem der Ansprüche 1 bis 8, wobei der Schritt des Erhaltens eines digitalen Zwischenbildes folgende Unterschritte umfasst:

  - Erhalten (60) einer Darstellung des wiederherzustellenden digitalen Bildes durch eine Vielzahl von Koeffizientenblöcken durch Anwendung einer Kompressionstransformation, wobei jeder Koeffizientenblock einem Block von Pixeln des wiederherzustellenden digitalen Bildes entspricht,
  - für mindestens einen verarbeiteten Koeffizienten eines Koeffizientenblocks:

    - Berechnen eines Rauschschwellenwerts in Abhängigkeit von einem repräsentativen Wert des instrumentellen Rauschmodells der Bilderfassung,
    - Vergleichen des absoluten Werts des verarbeiteten Koeffizienten mit dem Rauschschwellenwert, und
    • wenn der absolute Wert des verarbeiteten Koeffizienten größer oder gleich dem Rauschschwellenwert ist, wird der Koeffizient unverändert belassen,
    • wenn der absolute Wert des verarbeiteten Koeffizienten unter dem Rauschschwellenwert liegt, Ersetzen (62) des verarbeiteten Koeffizientenwerts durch einen Rauschwert, der von dem repräsentativen Wert für ein Rauschmodell der Bilderfassung abhängt.

**10.** Verfahren zur Wiederherstellung eines digitalen Bildes nach einem der Ansprüche 1 bis 9, wobei das instrumentelle Erfassungsrauschen durch ein parametrisiertes Modell modelliert wird, das die Standardabweichung des Rauschens $\sigma$ durch

$$\sigma = \sqrt{a^2 + b \cdot s}$$ definiert, wobei a und b Koeffizienten des Modells sind und s ein Koeffizientenwert ist, der für einen Mittelwert der mit den Pixeln eines betrachteten Pixelblocks eines digitalen Bildes verbundenen Werte repräsentativ ist.

**11.** Computerprogramm, das Anweisungen umfasst, um die Schritte eines Verfahrens zur Wiederherstellung eines digitalen Bildes nach einem der Ansprüche 1 bis 10 bei der Ausführung des Programms durch einen Prozessor einer programmierbaren Vorrichtung durchzuführen.

**12.** Vorrichtung zur Wiederherstellung eines digitalen Bildes, wobei das wiederherzustellende digitale Bild aus einem Anfangsbild stammt, das von einer Bilderfassungsvorrichtung mit einem zugehörigen instrumentellen Erfassungsrauschen erfasst wurde, wobei das wiederherzustellende digitale Bild durch Anwendung einer Komprimierung auf das erfasste Anfangsbild erhalten wurde, um ein komprimiertes ursprüngliches Bild zu erhalten, und anschließend durch eine Dekomprimierung des komprimierten Anfangsbildes, **dadurch gekennzeichnet, dass** sie Module umfasst, die von einem Prozessor einer programmierbaren Vorrichtung implementiert werden, die für Folgendes geeignet sind:

  - Erhalten eines digitalen Zwischenbildes mit Wiedergabe des instrumentellen Erfassungsrauschens,
  - Entrauschen des digitalen Zwischenbildes, um ein entrauschtes digitales Zwischenbild zu erhalten,
  - Dekonvolutieren des entrauschten digitalen Zwischenbildes, um ein wiederhergestelltes digitales Bild zu erhalten.

**13.** Digitale Bildwiederherstellungsvorrichtung nach Anspruch 12, bei der das wiederherzustellende digitale Bild ein multispektrales Bild ist, das aus einer Vielzahl von Bildern zusammengesetzt ist, die in verschiedenen Spektralbändern erfasst wurden, und die ferner ein Bildfusionsmodul umfasst, das geeignet ist, nach dem Entrauschen oder nach dem Dekonvolutieren eine Fusion anzuwenden, um ein endgültiges wiederhergestelltes Bild zu erhalten.

**Claims**

**1.** A method implemented by a programmable device, for restoring a digital image, the digital image to be restored being derived from an initial image acquired by an image acquisition device having associated instrumental acquisition noise,

  in which the digital image to be restored was obtained by applying a compression to the initial acquired image to obtain a compressed initial image, then a decompression of the compressed initial image, **characterized in that** it includes the following steps:

    - obtaining (30, 60-64, 80-94) an intermediate digital image, the intermediate digital image being a digital image obtained by restoring the instrumental acquisition noise to the digital image to be restored,

- denoising (32, 66-70, 96, 98) of the intermediate digital image to obtain a denoised intermediate digital image,
- deconvoluting (34, 100) the denoised intermediate digital image to obtain a restored digital image.

2. The method for restoring a digital image according to claim 1, wherein said restitution of instrumental acquisition noise is performed on the basis of a noise model comprising a parameter is defined as a function of a decompression coefficient of the initial compressed image.

3. The method for restoring a digital image according to any of claims 1 to 2, wherein the digital image to be restored is a multispectral image composed of a plurality of images acquired in different spectral bands and wherein the steps of obtaining (80-94) an intermediate digital image and denoising (96, 98) the intermediate digital image are applied to each of the images acquired in different spectral bands, and the deconvolution step (100) is applied to at least one of the intermediate digital images.

4. The method for restoring a digital image according to claim 3, further including a step of merging (102) images applied after denoising (96, 98) or after deconvolution (100), to obtain a final restored image.

5. The method for restoring a digital image according to any of claims 1 to 4, wherein the instrumental acquisition noise is modeled by a model parameterized by two coefficients, the coefficients having values used during the restitution of instrumental noise, and wherein the denoising step includes the application of a variance stabilization transformation parameterized by the two coefficients characterizing said parameterized model of the instrumental acquisition noise.

6. The method for restoring a digital image according to claim 5, wherein the digital image to be restored is a multispectral image composed of a plurality of images acquired in different spectral bands, and wherein values of the coefficients of the instrumental acquisition noise model depend on the acquisition spectral band and are determined for each acquisition spectral band.

7. The method for restoring a digital image according to any one of claims 5 or 6, wherein the denoising step includes the following substeps:

- applying (66) the variance stabilizing transformation to obtain a stabilized intermediate image,
- applying (68) a stationary noise denoising method to the stabilized intermediate image,

- applying (70) an inverse transformation of said variance stabilizing transformation to the digital image resulting from the step of applying a denoising method to obtain a denoised intermediate digital image.

8. The method for restoring a digital image according to claim 7, wherein said variance stabilization transformation is an Anscombe transformation,

9. The method for restoring a digital image according to any of claims 1 to 8, wherein the step of obtaining an intermediate digital image comprises the following sub-steps:

- obtaining (60), by applying a transformation known as a compression transformation, a representation of the digital image to be restored by a plurality of coefficient blocks, each coefficient block corresponding to a block of digital image pixels to be restored,
- for at least one processed coefficient of a coefficient block:

- calculating a noise threshold based on a value representative of the instrumental image acquisition noise model,
- comparing the absolute value of said processed coefficient with the noise threshold,

and,

• when the absolute value of the processed coefficient is greater than or equal to said noise threshold, said coefficient is left unchanged,
• when the absolute value of the processed coefficient is lower than said noise threshold, replacement (62) of the processed coefficient value by a noise value dependent on said value representative of an image acquisition noise model.

10. The method for restoring a digital image according to any one of claims 1 to 9, wherein the instrumental acquisition noise is modeled by a parameterized model defining the standard deviation of noise $\sigma$ by

$$\sigma = \sqrt{a^2 + b.s}$$, where a and b are coefficients of said model and s is a coefficient value representative of an average of the values associated with the pixels of a block of digital image pixels in question.

11. A computer program including instructions for implementing the steps of a method for restoring a digital image according to any one of claims 1 to 10 during execution of the program by a processor of a programmable device.

**12.** A device for restoring a digital image, the digital image to be restored being derived from an initial image acquired by an image acquisition device having associated instrumental acquisition noise, wherein the digital image to be restored was obtained by applying a compression to the initial acquired image to obtain an initial compressed image, followed by a decompression of the initial compressed image, **characterized in that** it includes modules, implemented by a processor of a programmable device, adapted to:

- obtain an intermediate digital image with restitution of the instrumental acquisition noise,
- denoise the intermediate digital image to obtain a denoised intermediate digital image,
- deconvolve the denoised intermediate digital image to obtain a restored digital image.

**13.** The device for restoring a digital image according to claim 12, wherein the digital image to be restored is a multispectral image composed of a plurality of images acquired in different spectral bands, further including an image fusion module adapted to apply a fusion after denoising or after deconvolution, to obtain a final restored image.

10

-12- → -14- → -16-

1

20

-22- → -24- → -26-

## FIG.1

| Décompression avec restitution de bruit instrumental d'acquisition | 30 |

↓

| Débruitage | 32 |

↓

| Déconvolution | 34 |

↓

| Fusion | 36 |

## FIG.2

40

-48-

52

-44-

-46-

**FIG.3**

-42-

-50-

Représentation domaine transformé — 60

30

Remplacement coefficients — 62

a,b

Transformation inverse — 64

I_interm

Transformation d'Anscombe — 66

32

Débruitage — 68

Transformation d'Anscombe inverse — 70

34 — Déconvolution

FIG.4

$I_0$

| 80 | ACQUISITION |
| 84 | COMPRESSION |
| 88 | DECOMPRESSION |
| 90 | RESTITUTION BRUIT INSTR |
| 96 | DEBRUITAGE |
| 100 | DECONVOLUTION |

$I_1, \ldots I_n$

| ACQUISITION | 82 |
| COMPRESSION | 86 |
| DECOMPRESSION | 92 |
| RESTITUTION BRUIT INSTR | 94 |
| DEBRUITAGE | 98 |

$I'_0$

$I'_1, \ldots I'_n$

| 102 | FUSION |

$I_{final}$

# FIG.5

## RÉFÉRENCES CITÉES DANS LA DESCRIPTION

**Documents brevets cités dans la description**

- US 20050259889 A1
- FR 3025640
- FR 2994007, S. Fourest et C. Latry

**Littérature non-brevet citée dans la description**

- **C. LATRY et al.** Restoration technique for Pleiades-HR panchromatic images. *International Archives of the Photogrammetry, Remote Sensing and Spatial Information Sciences*, 2012, vol. XXXIX-B1
- **MARC LEBRUN ; ANTONI BUADES ; JEAN-MICHEL MOREL**. A Nonlocal Bayesian Image Denoising Algorithm. *SIAM Journal on Imaging Sciences*, vol. 6 (3), 1665-1668